# EUROPEAN PATENT APPLICATION

(11) **EP 0 924 947 A1**
(43) Date of publication of application: **23.06.1999**
(21) Application number: 97310445.8
(22) Date of filing: 22.12.1997
(51) Int. Cl.: H04Q 7/32

(54) **Power saving in a digital cellular system terminal**

(71) Applicant: THE TECHNOLOGY PARTNERSHIP PUBLIC LIMITED COMPANY, Melbourn Royston Hertfordshire SG8 6EE (GB)
(72) Inventor: Fogg, Andrew, Sandy, Bedfordshire, SG19 3AD (GB)
(74) Representative: Haley, Stephen

(57) **Abstract**

A system and method for calibrating the slow rate clock of a digital cellular communication system, the slow rate clock being employed to provide an intermittent power saving sleep function for the terminal. The system comprises means for generating a signal indicative of the occurrence of a first timing point in a signal transmitted from a cellular system base station, and first time period means for determining the time period between receipt of the signal indicative of the first timing point and a transition in the state of a slow clock signal. There is also means for counting the number of transitions in the slow clock signal after receipt of the signal indicative of the first timing point occurrence and means for detecting the presence of a signal indicative of the receipt of a second timing point in a signal from the cellular system base station. A second time period detection means for determining the time period between receipt of the signal indicative of the second time point and an adjacent transition on the slow clock signal, and further means uses the output of the slow clock transition counter, the first time period detection means, and the second time period detection means to determine the prevailing actual frequency of the slow clock for control, in use, of the intermittent sleep function.

## Description

This invention relates to power consumption reduction in cellular communication systems terminals.

A key performance parameter for battery-powered mobile terminals in cellular communications systems is the standby time. Standby time is the time for which the terminal can remain able to make or receive calls on one charging of its battery. It is desirable to minimise the average power consumption of the mobile terminal in standby mode in order to increase this time period. Digital cellular systems facilitate power saving by providing for discontinuous reception by the mobile terminal, the terminal needs to receive signals only intermittently and may power off its receiver between receive periods. Network parameters, typically published in some form of broadcast information channel, determine the frequency and timing of the required receive periods for all terminals registered to the network. The terminal needs only to track system time between receive periods, and between such periods may be completely dormant, except for the timing mechanism.

It is well known in the art that power saving in digital systems is achieved primarily by three methods, firstly by reducing the operating voltage of the circuit, secondly by reducing the size of the active elements of the circuit in order to reduce the capacitances that must be charged or discharged at every signal transition, and thirdly by minimising the number of signal transitions. The latter case, to which the invention relates, is achieved by turning off all elements of the circuit that are not needed for the circuit function at the time in question, and by operating those elements of the circuit that are needed at the slowest transition frequency that is compatible with the desired function. This reduced transition rate is frequently provided by supplying a slower-than-normal system clock.

In the case of a terminal during the "sleep" time between scheduled receive periods, the only function that is required is to keep track of time in order to recognise the next wakeup point, all elements of the circuit not associated with this function can be turned off. The timer itself typically consists of a digital counter that counts the cycles of a system clock signal, this clock is often the system master clock running at a frequency of many megahertz. It is desirable, however, to be able to substitute a much slower clock than this during "sleep", say of a few tens of kilohertz in order to remain within reasonable practical limits of oscillator stability.

In practice, however, very tight synchronisation of the internal timebase of the mobile terminal to that of the network is required in order to allow sufficiently accurate timing of the receiver wakeup, and inexpensive low-frequency oscillators tend to have relatively poor frequency accuracy and stability against temperature. In order to save power the terminal's receiver and master oscillator are turned off. The slower timing oscillator must free-run to time the "sleep" interval. It cannot be frequency-locked to the incoming signal from the cellular network. It is therefore necessary to calibrate the slow oscillator by some means in order to determine whether it is sufficiently stable to time the required interval to sufficient accuracy, and to determine the actual oscillation frequency prevailing at the time.

The conventional method for achieving this calibration is to compare the frequency of the slow oscillator to that of the master oscillator in the terminal. Either the master oscillator is frequency-locked to the signal received from the network, or it free-runs but a correction factor for the clock is derived and applied within the terminal. The master oscillator may then be used to measure the frequency of the slow oscillator in order to determine whether it is sufficiently stable to be used to time "sleep" periods, together with the actual oscillation frequency so that the correct value may be loaded into the sleep timer. This method has the disadvantage of including any error present in the master oscillator frequency (actual or corrected) into the slow clock calibration.

It is an object of the present invention to provide an improved method of calibration for the slow clock used as the sleep period timing source in a terminal optimised for low power consumption.

According to the present invention there is provided a system for calibrating the slow rate clock of a digital cellular communication system, the slow rate clock being employed to provide an intermittent power saving sleep function for the terminal, the system comprising:
means for generating a signal indicative of the occurrence of a first timing point in a signal transmitted from a cellular system base station;
first time period means for determining the time period between receipt of the signal indicative of the first timing point and a transition in the state of a slow clock signal;
means for counting the number of transitions in the slow clock signal after receipt of the signal indicative of the first timing point occurrence;
means for detecting the presence of a signal indicative of the receipt of a second timing point in a signal from the cellular system base station;
second time period detection means for determining the time period between receipt of the signal indicative of the second time point and an adjacent transition on the slow clock signal; and
means for using the output of the slow clock transition counter, the first time period detection means, and the second time period detection means to determine the prevailing actual frequency of the slow clock for control, in use, of the intermittent sleep function.

The first and second calculated time periods may be determined from receipt of the signal indicative of the receipt of the appropriate timing point and the next slow clock transition, or the slow clock transmission immediately prior to receipt of the appropriate signal, or a combination thereof.

The means provided to calibrate the slow clock may also be capable of performing the calibration in a span of time that is short compared to the worst-case drift rate of the clock. This allows the drift rate to be measured as well as the actual slow clock frequency, so that if the drift profile conforms to some model, the drift can be predicted over the next sleep period and the slow clock thereby used while it is not sufficiently stable for uncompensated operation. For example, linear, power-series or exponential drift models may be appropriate, depending on the relationship of the oscillator frequency to temperature and the dynamic thermal behaviour of the mobile terminal and its components. This means may be provided in the processor controlling the power saving systems.

The system may further include means to measure other parameters, for example the temperature of the slow clock oscillator crystal, in order to employ a more sophisticated model of the behaviour of the slow clock with time and temperature, further improving the subsystems ability to use slow clock sleep while the slow clock oscillator frequency is drifting. This means may be provided via the control processor's peripheral interface.

There may also be means of implementation for tracking and predicting the drift of the slow clock oscillator frequency. The exact characteristics of the slow clock oscillator in any particular implementation of the invention will vary from one example to another. The components of the system that model, correct and predict the slow clock oscillator behaviour (including any elements provided to take account of external influences such as crystal temperature) may be provided with means (typically elements of the subsystem software) to adapt the modelling, correction and prediction processes to the observed behaviour of the particular oscillator in that unit, so that the subsystem may "learn" the behaviour of the oscillator and thereby improve its ability to predict; that is, the slow clock correction subsystem is made to be adaptive.

A corresponding method is also provided.

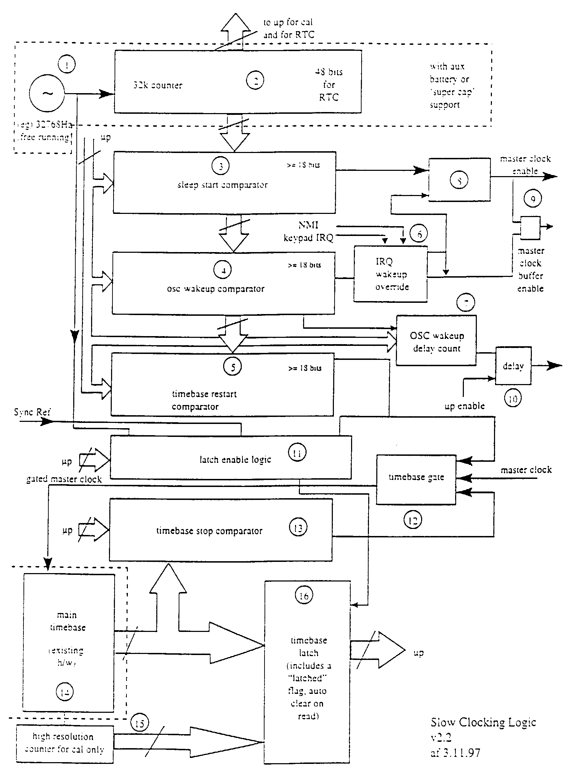

One example of the present invention will now be described with reference to accompanying figure 1.

Before describing an example of the invention, it is appropriate to provide further background information regarding cellular systems.

All digital cellular network signals contain elements of the signal transmitted by the base station (for instance, one or several predetermined bit sequences) which allow the terminal to acquire frequency and timing synchronisation to the network. The intervals between these signal elements are timed by the network master clock which is arranged to be extremely accurate relative to the uncorrected terminal master clock. As a consequence, the signals received at the terminal form an extremely accurate timebase (distorted only by multipath effects and Doppler shift). A standard function of any mobile terminal is to determine the precise arrival timing of these synchronisation patterns in order to correct the terminal's local timebase to align with the network timebase. By employing the present invention this information can also be used to calibrate the slow clock in a manner that is substantially independent of the accuracy of the master oscillator and that does not use the master oscillator to measure the frequency of the slow clock.

Figure 1 shows an example of the invention for use in a GSM cellular system, although it could be adapted for other systems. A free-running slow clock oscillator 1, such as a low-cost low-power 32768Hz crystal as commonly used in wristwatches is provided, together with a slow clock counter 2 used to count the "ticks" of the slow clock oscillator 1.

This slow clock counter 2 can be made up to 48 binary bits long (in the case of a 32768Hz slow clock) to provide convenient support for a real-time clock facility, in this case the slow clock oscillator 1 and the slow clock counter 2 should be provided with a power source (not shown), that provides power when the cellular terminal's main battery is discharged or removed, for instance a small lithium primary cell as is well known in the art.

A sleep start comparator 3 can be loaded with a particular count value and arranged to provide an output signal when the value currently in the slow clock counter 2 advances to that value. The number of bits in the sleep start comparator 3 is determined by the maximum time that may be needed to conclude the preparations for slow clock sleep before the terminal's master clock is turned off. The sleep start comparator 3 is loaded from a control processor. An oscillator wakeup comparator 4 is loaded with a particular count value and arranged to provide an output signal when the value currently in the slow clock counter 2 advances to that value. The number of bits in the oscillator wakeup comparator 4 is determined by the maximum desired duration of slow clock sleep. Again, this comparator 4 is loaded from the control processor.

A timebase restart comparator 5 that can be loaded with a particular count value and arranged to provide an output signal when the value currently in the slow clock counter 2 advances to that value. The number of bits in the timebase restart comparator 5 is determined by the maximum desired duration of slow clock sleep. Again, this comparator 5 is loaded from the control processor.

Interrupt wakeup override logic 6 is provided to force wakeup of the terminal master oscillator in the event of an external event during slow clock sleep requiring attention from the terminal's control processor.

An oscillator wakeup delay counter 7 delays enabling of the master oscillator drive buffer for a small number of slow clock cycles after restart of the actual oscillator. This is provided in order to allow the master oscillator 14 to stabilise before providing master clock drive to the remainder of the circuit. The delay counter is loaded from the terminal's control processor. Logic circuits 8, 9, 10 combine the output signals from the sleep start comparator 3, interrupt wakeup override 6 and delay counter logic 7 to form the necessary oscillator control, buffer control and wakeup interrupt signals.

Latch enable logic 11 determines which of a number of possible events will cause the timebase latch 16 to latch the state of the terminal main timebase 14 at the moment the selected event occurs. This latch enable logic 11 can be configured from the terminal control processor.

A timebase gate 12, under control of the timebase restart comparator 5 and a timebase stop comparator 13, enables and disables the master clock 14 to the main timebase.

The timebase stop comparator 13 can be loaded with a particular timebase value and arranged to provide an output signal when the value in the main timebase 14 advances to that value. This timebase stop comparator 13 is, again, loaded from the terminal control processor.

The main timebase 14 is for the terminal's channel coding and decoding subsystem. The details of this component are implementation-specific, but is the means whereby the terminal maintains a local copy of the frame and bit timings of the digital cellular network in which it is operating. This block is not part of the invention but will exist in some form in any digital cellular terminal.

An optional master clock counter 15 is provided. This clock counter 15 is used to supplement the main timebase 14 when the resolution of the main timebase 14 is inadequate for fine calibration of the slow clock 1 (by virtue of degrading the accuracy with which the sync point to slow clock edge offset time can be determined).

There is also a timebase latch 16. When triggered by the latch enable logic 11 this latch 16 freezes the value of the main timebase 14 at the trigger point for subsequent inspection by the terminal control processor.

Operation of this particular example of the slow clock subsystem falls into three phases, slow clock calibration, slow clock sleep and slow clock calibration maintenance. These phases will be described below, again, with reference to Figure 1.

Before slow clock "sleep" can be used, the slow clock 1 must be calibrated in order to ensure that its frequency is drifting sufficiently slowly (or predictably) to permit the sleep time to be accurately timed, and in order to determine the actual (effective) value of the slow clock frequency that should be used to calculate the length of the sleep interval (an integer number of counts of the slow clock in the slow counter 2).

The method achieves calibration of the slow clock by counting the number of cycles of the slow clock occurring between two known synchronisation points in the on-air signal from the cellular base station. However, because the slow clock is free-running and by definition cannot be under closed loop control during sleep periods (because all other circuitry save for the sleep timing counter has been turned off to save power), the period between the two synchronisation points chosen will not in general be an integer number of cycles of the slow clock; indeed, even it were, the phase of the slow clock relative to the network timing is arbitrary. Furthermore, in some implementations the frequency of the slow clock oscillator may not be conveniently related to the frequency of occurrence of the synchronisation points; for example, the slow oscillator is often a low-power 32768Hz crystal such as is commonly used in digital watches, and the cellular system may be GSM, in which the sync points happen at intervals related to the GSM frame rate of approximately 4.615ms/frame. It is therefore necessary to have some means of determining the time from each sync point to an active edge of the slow clock; if these time offsets were ignored, the number of slow clock cycles that would have be counted to achieve a sufficiently accurate calibration would in most practical cases become very large, resulting in a calibration time that is long compared to the drift rate of the slow clock oscillator and hence reducing the ability of the system to track and compensate for that drift.

Knowing the time from the first synchronisation point to the next edge of the slow clock, the number of slow clock cycles counted up to the second synchronisation point, the time from the last slow clock edge counted to the second synchronisation point, and the time (fixed by the network) between the two synchronisation points, the frequency of the slow clock can be determined. If the time between the two synchronisation points is sufficiently long, the intervals between the first and last slow clock edges counted and their corresponding synchronisation points can be made arbitrarily small, and so the inaccuracy of the means used to determine the times from clock edges to sync points can be made insignificant. In practice, during calibration of the slow clock, the mobile terminal's master oscillator will be active, which even without frequency lock to the network will be quite adequately accurate for this task. This being so, the slow clock is calibrated directly against the network timebase, rather than against the master clock of the terminal (whether the latter is frequency-locked to the network or not).

The terminal control processor uses the hardware shown in Figure 1, together with the means (not shown) elsewhere in the terminal for obtaining time synchronisation to the digital cellular network to calibrate the slow clock against the period between two selected network sync points as follows.

Firstly, the latch enable logic 11 is configured to capture the main timebase value via the timebase latch 16 at a network sync point. The capture is triggered via a hardware signal deterministically time-related to reception of the synchronisation sequence, labelled SyncRef in the example. The control processor and elements of the receiver system may need to perform some timing arithmetic to derive the exact time relationship of this signal to the actual sync point. Having obtained this value, with proper precautions concerning the asynchronous nature of the slow clock, the latch enable logic is configured to obtain the timebase value at the next edge of the slow clock 1. From this, the time from the network sync point to the captured slow clock edge, can be calculated from the difference in the two captured timebase values. A suitable time later, the latch enable logic is configured to capture the timebase value on a slow clock edge, just before another network sync point, and then to capture the timebase value at that network sync point. Now the time offset between the second chosen slow clock edge and the second chosen network sync point can be calculated. From knowledge of the structure and timing of the network transmissions, and from the number of cycles of the slow clock that have elapsed between the two captures, the average frequency of the slow clock 1 over the calibration interval can be can be calculated.

It will be noted that, by suitable choice of the calibration time the influence of inaccuracy in the local timebase, which is used only as a transfer standard, and need only be of high enough frequency to give sufficient resolution or of inaccuracy in the determination of the network sync point time, becomes insignificant. Also, the order of the capture of the slow clock edge and network sync point times at each end of the calibration period is not important.

Depending on the details of the implementation and of the particular digital cellular standard concerned, further mathematical processing of the calibration result acquired by the above process may he necessary or desirable (for example, averaging, or drift calculation and prediction).

Once the slow clock has been calibrated and has been found to be within suitable tolerances, the terminal may use slow clock sleep in order to save power. "Suitable tolerances" here means either that the clock is in an absolute sense stable enough to time the sleep periods to the required accuracy, or that the drift rate of the slow clock is within the capacity of any correction or prediction algorithms that the terminal may be able to apply. With the implementation shown in Figure 1, in which the terminal control processor cannot reload some of the less significant bits of the main timebase 14, the system is used as set out below.

At the point when the terminal control processor determines that the system should sleep for a period, the latch enable logic 11 is configured to capture the main timebase value at the next slow clock edge. The value captured in the timebase latch 16 and the current value of the slow clock counter 2 are noted. From this, the value of the slow clock count at which the master oscillator should be restarted can be calculated, knowing the time needed for the master oscillator to stabilise on startup. The appropriate value is programmed into the oscillator wakeup comparator 4, taking account of the setting of the oscillator wakeup delay count 7 (which has been previously set to the proper value for the particular implementation). Further, the value of the slow clock count at which the main timebase should be restarted can also be calculated (later than the oscillator restart and the subsequent buffer enable). This value is loaded into the timebase restart comparator 5. Also from the captured values, the proper timebase value at the restart slow clock edge can be calculated, and the next point (in the near future) at which the non-reloadable part of the timebase will have those values can be determined. This value is loaded into the timebase stop comparator 13 which freezes the main timebase 14 via the timebase gate 12 when the non-loadable elements of the main timebase have the correct settings for restart. From all of this information it is also possible to calculate the first slow clock counter value occurring after the timebase freeze has occurred. This value is loaded into the sleep start comparator 3.

Once these values have been calculated and loaded, the control processor waits in an idle loop or software standby mode, and the slow clock sleep period is sequenced in order. Firstly, the main timebase 14 advances to the value in the timebase stop comparator 13, which, via the timebase gate 12, freezes the main timebase at the correct value for restart. The slow clock counter 2 advances to the value in the sleep start comparator 3, which stops the master oscillator and disables the oscillator buffer via the logic elements 8 and 9. Now only the slow clock oscillator 1 and counter 2 are running, resulting in minimum power consumption. Eventually, the slow clock count advances to the value in the oscillator wakeup comparator 4, which restarts the master oscillator via the override circuit 6 and logic element 8, and also, after a delay set by the oscillator wakeup delay counter 7, enables the master oscillator drive buffer via logic element 9. A short time later the terminal control processor (now provided with clock input once again) is woken up by the signal issued by the wakeup signal delay block 10 and begins its wakeup actions, which typically include a check for the reason for the wakeup. The slow clock counter 2 continues to advance, and a short time after the oscillator wakeup and buffer enable, the counter 2 will reach the setting in the timebase restart comparator 5, which, via the timebase gate 12, restarts the main timebase 14. Shortly thereafter, the control processor reloads the more significant digits of the main timebase 14, with the result the main timebase will now be aligned exactly as if the sleep period had not occurred.

In the event that an external event (such as the user pushing a key) occurs, the wakeup override logic 6 triggers a master oscillator restart via the logic elements 8, 9, 10 and the wakeup delay counter 7 exactly as if the oscillator wakeup comparator 4 had triggered wakeup. The timebase restart comparator 5 is then left to restart the timebase at the proper time.

Once slow clock sleep is in use it is necessary to maintain the calibration of the slow clock oscillator 1. This can be achieved by comparing the actual achieved wakeup times with the expected times using timing information returned by the receive path equaliser. Some of the wakeup time error will result from changing propagation conditions, and some from deviations in the slow clock frequency from its expected value over the sleep period; filtering algorithms may be employed to reduce the effect of the propagation errors. If, however, the apparent error becomes too large, an explicit recalibration of the slow clock 1 can be applied.

## Claims

1. A system for calibrating the slow rate clock of a digital cellular communication system, the slow rate clock being employed to provide an intermittent power saving sleep function for the terminal, the system comprising:
means for generating a signal indicative of the occurrence of a first timing point in a signal transmitted from a cellular system base station;
first time period means for determining the time period between receipt of the signal indicative of the first timing point and a transition in the state of a slow clock signal;
means for counting the number of transitions in the slow clock signal after receipt of the signal indicative of the first timing point occurrence;
means for detecting the presence of a signal indicative of the receipt of a second timing point in a signal from the cellular system base station;
second time period detection means for determining the time period between receipt of the signal indicative of the second time point and an adjacent transition on the slow clock signal; and
means for using the output of the slow clock transition counter, the first time period detection means, and the second time period detection means to determine the prevailing actual frequency of the slow clock for control, in use, of the intermittent sleep function.

2. A system according to claim 1, wherein the first and second calculated time period determining means determine the time periods from receipt of the signal indicative of the receipt of the appropriate timing point and the next slow clock transition, or the slow clock transmission immediately prior to receipt of the appropriate signal, or a combination thereof.

3. A system according to claim 1 or claim 2, wherein the means provided to calibrate the slow clock is also capable of performing the calibration in a span of time that is short compared to the worst-case drift rate of the clock.

4. A system according to claim 3, further comprising drift rate measuring means.

5. A system according to claim 3 or claim 4, further comprising means for adaptively tracking and adaptively predicting the drift of the slow clock oscillator frequency.

6. A system according to any of the preceding claims, further including means to measure the temperature of the slow clock oscillator crystal, and to model the behaviour of the slow clock with time and temperature.

7. A method for calibrating the slow rate clock of a digital cellular communication system, the slow rate clock being employed to provide an intermittent power saving sleep function for the terminal, the method comprising the steps of:
generating a signal indicative of the occurrence of a first timing point in a signal transmitted from a cellular system base station;
determining the time period between receipt of the signal indicative of the first timing point and a transition in the state of a slow clock signal;
counting the number of transitions in the slow clock signal after receipt of the signal indicative of the first timing point occurrence;
detecting the presence of a signal indicative of the receipt of a second timing point in a signal from the cellular system base station;
determining the time period between receipt of the signal indicative of the second time point and an adjacent transition on the slow clock signal; and
using the number of transitions, the first time period, and the second time period to determine the prevailing actual frequency of the slow clock for control, in use, of the intermittent sleep function.

8. A system according to claim 7, wherein the first and second calculated time periods are determined from receipt of the signal indicative of the receipt of the appropriate timing point and the next slow clock transition, or the slow clock transmission immediately prior to receipt of the appropriate signal, or a combination thereof.

9. A method according to claim 7 or claim 8, wherein the means calibrating of the slow clock is performed in a span of time that is short compared to the worst-case drift rate of the clock.

10. A method according to claim 9, further comprising the step of measuring drift rate.

11. A method according to claim 9 or claim 10, further comprising the steps of adaptively tracking and adaptively predicting the drift of the slow clock oscillator frequency.

12. A method according to any of claims 7 to 11, further including the steps of measuring the temperature of the slow clock oscillator crystal, and modelling the behaviour of the slow clock with time and temperature.
